**Europäisches Patentamt**

**European Patent Office**

**Office européen des brevets**

(11) Veröffentlichungsnummer: **0 050 306**
**A2**

# EUROPÄISCHE PATENTANMELDUNG

(21) Anmeldenummer: **81108313.8**

(22) Anmeldetag: **14.10.81**

(51) Int. Cl.³: **G 01 D 5/26**

(30) Priorität: **21.10.80 SE 8007376**

(43) Veröffentlichungstag der Anmeldung: **28.04.82**
**Patentblatt 82/17**

(84) Benannte Vertragsstaaten: **CH DE FR GB IT LI**

(71) Anmelder: **ASEA AB, S-721 83 Västeras (SE)**

(72) Erfinder: **Adolfsson, Morgan, Dipl. Ing., S.**
**Edströmsgatan 86, S-724 66 Västeräs (SE)**
Erfinder: **Brogärdh, Torgny, Plätverksgatan 140,**
**S-724 74 Västeräs (SE)**
Erfinder: **Göransson, Sture, Dipl. Ing.,**
**Klockartorpsgatan 44C, S-723 44 Västeräs (SE)**
Erfinder: **Ovrén, Christer, Dr., Vilddjursvägen 9,**
**S-722 43 Västeräs (SE)**

(74) Vertreter: **Boecker, Joachim, Dr.-Ing.,**
**Rathenauplatz 2-8, D-6000 Frankfurt a.M. 1 (DE)**

(54) **Faseroptische Messanordnung.**

(57) Die Erfindung betrifft eine faseroptische Meßanordnung zur Messung physikalischer oder chemischer Größen mit mindestens einer Lichtquelle (11), wie z. B. einer Leuchtdiode, die in optischer Verbindung mit dem Sensor (1) steht, dessen spektrale Eigenschaften (z. B. Absorptions- oder Lumineszenzspektrum) von der Meßgröße verändert werden. Ferner ist mindestens ein Lichtdetektor (13), z. B. eine Fotodiode oder ein Fototransistor, vorhanden zum Empfang des Ausgangssignals vom Sensor (1).

Die Erfindung ist dadurch gekennzeichnet, daß das Meßsignal durch Spektralanalyse gewonnen wird, die dadurch erfolgt, daß die Spektralverteilung der Lichtquelle (11) verändert oder konstant gehalten wird, und/oder daß das Empfindlichkeitsspektrum des Lichtdetektors (13) verändert oder konstant gehalten wird, und daß diese Steuerung des Emissionsspektrums bzw. des Empfindlichkeitsspektrums durch Steuerung der Temperatur der Lichtquelle (11) bzw. des Lichtdetektors (13) erfolgt.

0050306

Patentanwalt und Rechtsanwalt
Dr.-Ing. Dipl.-Ing. Joachim B o e c k e r

6 Frankfurt / Main 1          28.09.1981
Rathenauplatz 2 - 8
Telefon: (06 11) * 28 23 55    21 011 PE
Telex : 4 189 066 itax d

<u>ASEA AKTIEBOLAG, VÄSTERAS/SCHWEDEN</u>

<u>Faseroptische Meßanordnung</u>

Die Erfindung betrifft eine faseroptische Meßanordnung gemäß dem Oberbegriff des Anspruches 1.

Beim Messen mit faseroptischen Gebern, deren Sensoren spektrale Eigenschaften haben, die von der Meßgröße (physikalische oder chemische Größen) verändert werden, ist eine genaue Kontrolle des Emissionsspektrums der Lichtquellen und des Empfindlichkeitsspektrums der Lichtdetektoren erforderlich, was manchmal mit Problemen verbunden sein kann.

Der Erfindung liegt die Aufgabe zugrunde, eine faseroptische Meßanordnung der eingangs genannten Art zu entwikkeln, bei der diese und andere damit zusammenhängende Probleme gelöst sind.

Zur Lösung dieser Aufgabe wird eine faseroptische Meßanordnung nach dem Oberbegriff des Anspruches 1 vorgeschlagen, welche die im kennzeichnenden Teil des Anspruches 1 genannten Merkmale hat.

Vorteilhafte Weiterbildungen der Erfindung sind in den Unteransprüchen genannt.

Die eingangs genannten Probleme werden also dadurch gelöst,

/2

- 2 -

daß die Temperaturregelung in den Bauteilen selbst erfolgt.

Die Variation in den Emissions- und Empfindlichkeitsspektren, die zur Auswertung des Meßwertes erforderlich ist, kann dadurch vorgenommen werden, daß die Temperatur der Lichtquelle und des Lichtdetektors variiert wird.

Beim Messen physikalischer und chemischer Größen mit Hilfe faseroptischer Anordnungen können Veränderungen in der Spektralzusammensetzung des Lichtes ein Maß für die Meßgröße sein. Um eine genaue Spektralanalyse durchführen zu können, ist es erforderlich, daß die Spektralverteilung des Lichtes der verwendeten Lichtquellen und die Empfindlichkeit der verwendeten Lichtdetektoren genau gesteuert oder geregelt wird, was meistens eine Temperaturstabilisierung der Lichtquellen, Lichtdetektoren und der zugehörenden optischen Filter erfordert. Die vorliegende Erfindung stellt eine Lösung dieser Probleme dar.

Anhand der Figuren soll die Erfindung näher erläutert werden. Es zeigen:

Fig. 1   das Blockschaltbild einer typischen faseroptischen Meßanordnung, wie sie beispielsweise aus der DE-OS 2920489 bekannt ist,

Fig. 2   ein Ausführungsbeispiel einer Anordnung gemäß der Erfindung,

Fig. 3 a   eine Strom- und Spannungskurve für die Lichtquelle bei einer Anordnung gemäß der Erfindung, bei der eine Temperaturkorrektur vorgenommen wird,

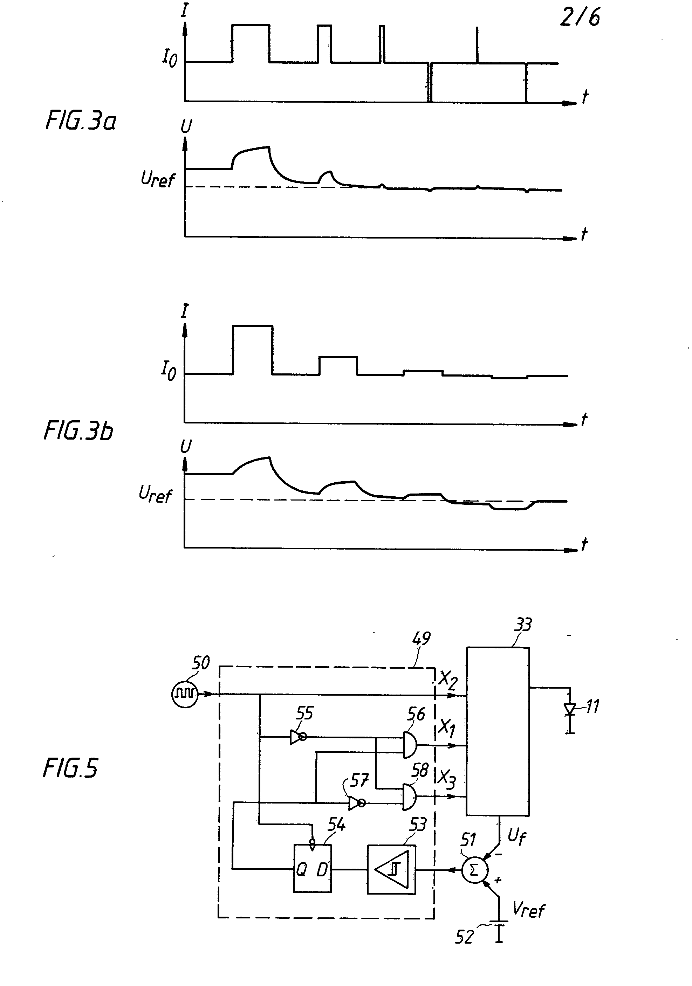

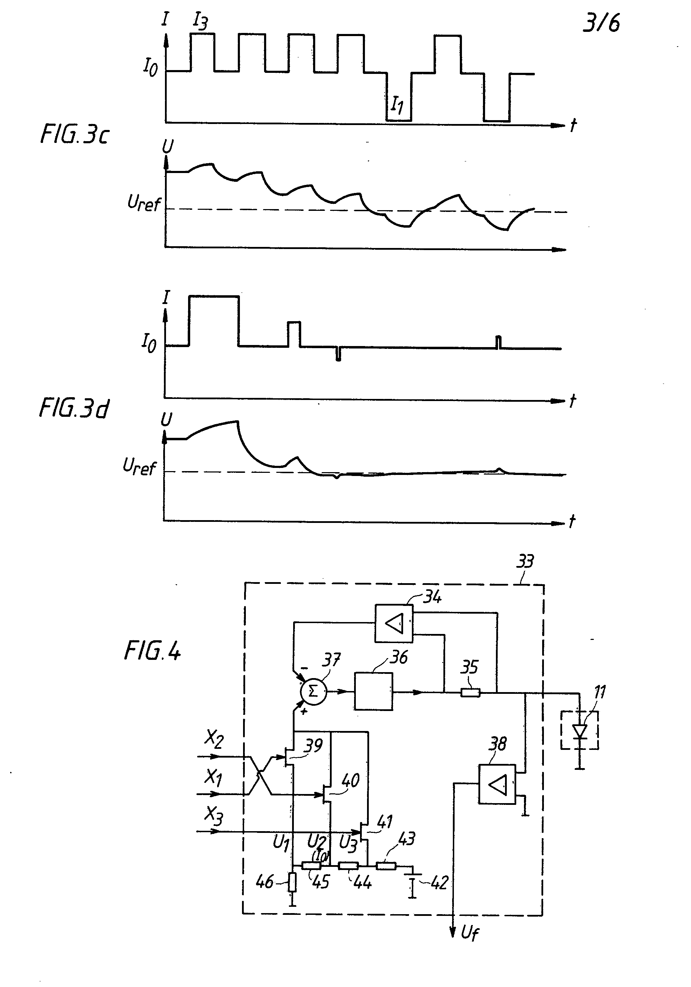

Fig. 3 b   entsprechende Kurven wie in Fig. 3 a für eine Anordnung, bei der die Temperaturkorrektur durch Stromimpulse von konstanter Dauer durchgeführt wird,

Fig. 3 c   entsprechend wie Fig. 3 a die Strom- und

/3.

- 3 -

Spannungskurven für eine Lichtquelle bei einer Anordnung gemäß der Erfindung, bei der die Temperaturkorrektur nach jedem Meßintervall vorgenommen wird,

Fig. 3 d entsprechende Kurven mit einer adaptiven Steuerung des Lichtquellenstromes (Leuchtdiodenstromes),

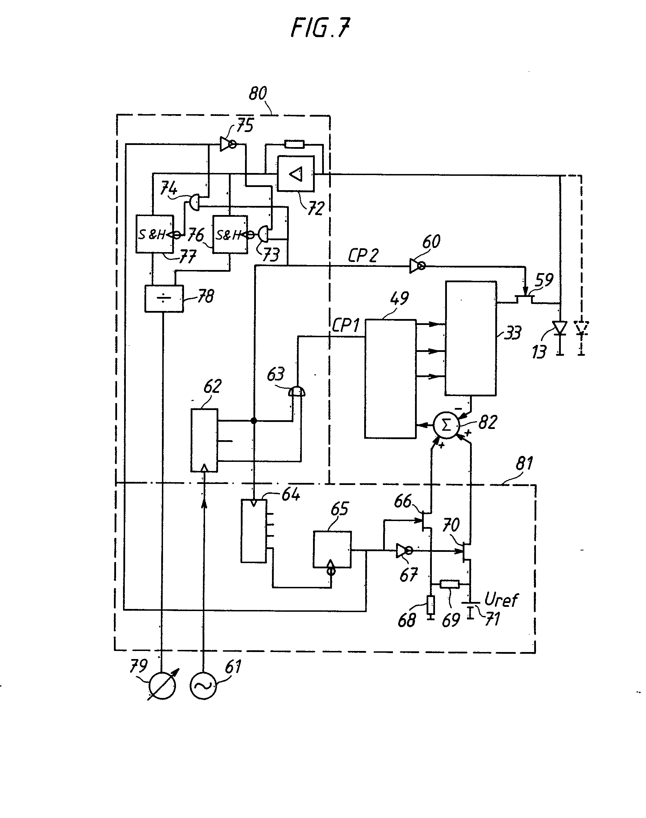

Fig. 4 und 5 eine Anordnung gemäß der Erfindung mit unveränderlichem Emissionsspektrum, .

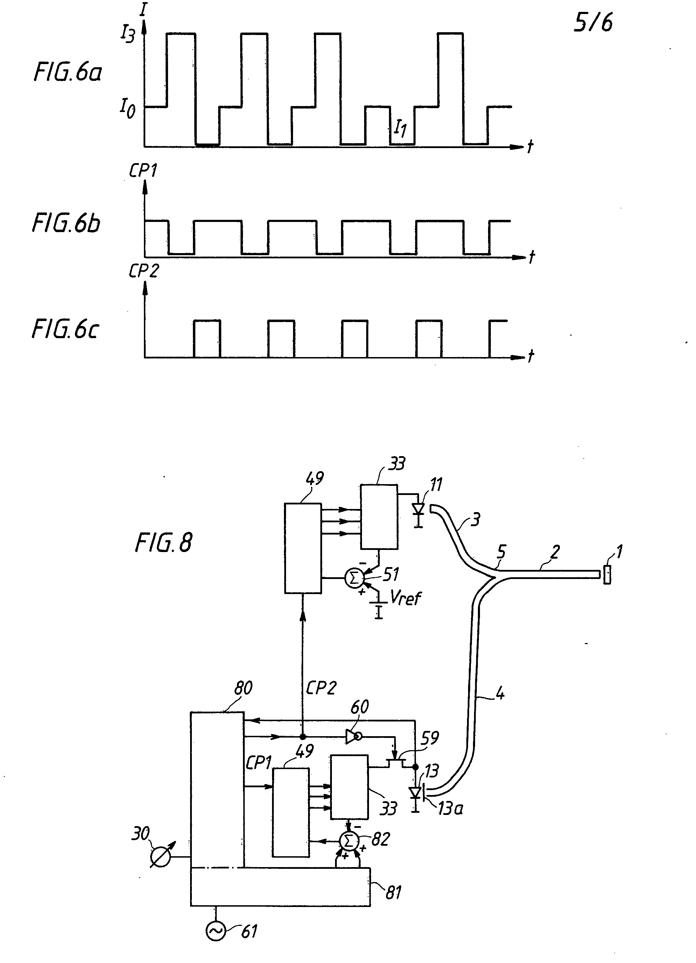

Fig. 6 Kurven, die den Empfang des Lichtes zeigen, wobei der Verlauf in drei Intervalle aufgeteilt ist,

Fig. 7 ein Ausführungsbeispiel für den Empfängerteil einer Anordnung gemäß der Erfindung, in welchem die Analyse der Spektralverteilung des Lichtes durchgeführt wird,

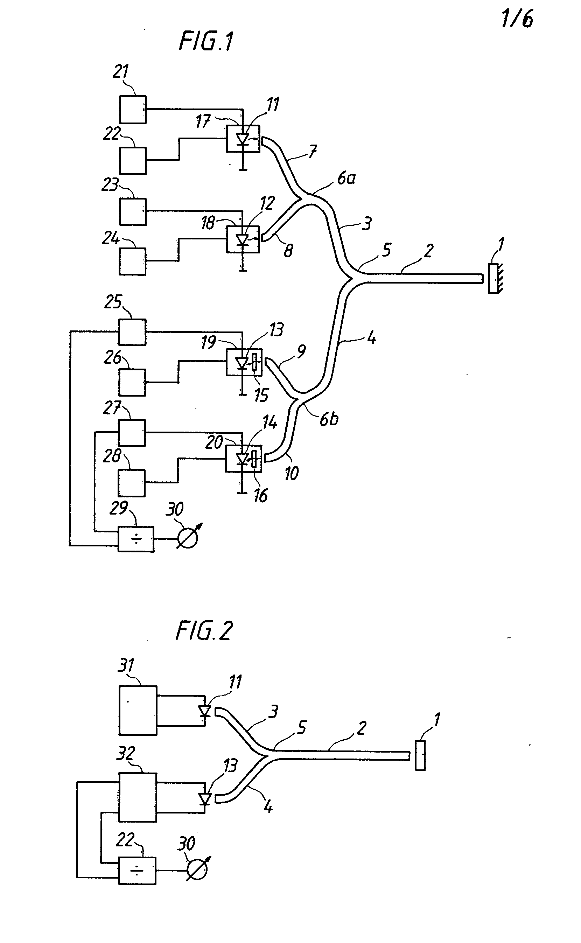

Fig. 8 eine Meßanordnung gleicher Art wie in Fig. 2, die mit den Schaltungen aufgebaut ist, die in Zusammenhang mit den Figuren 3 - 7 beschrieben werden,

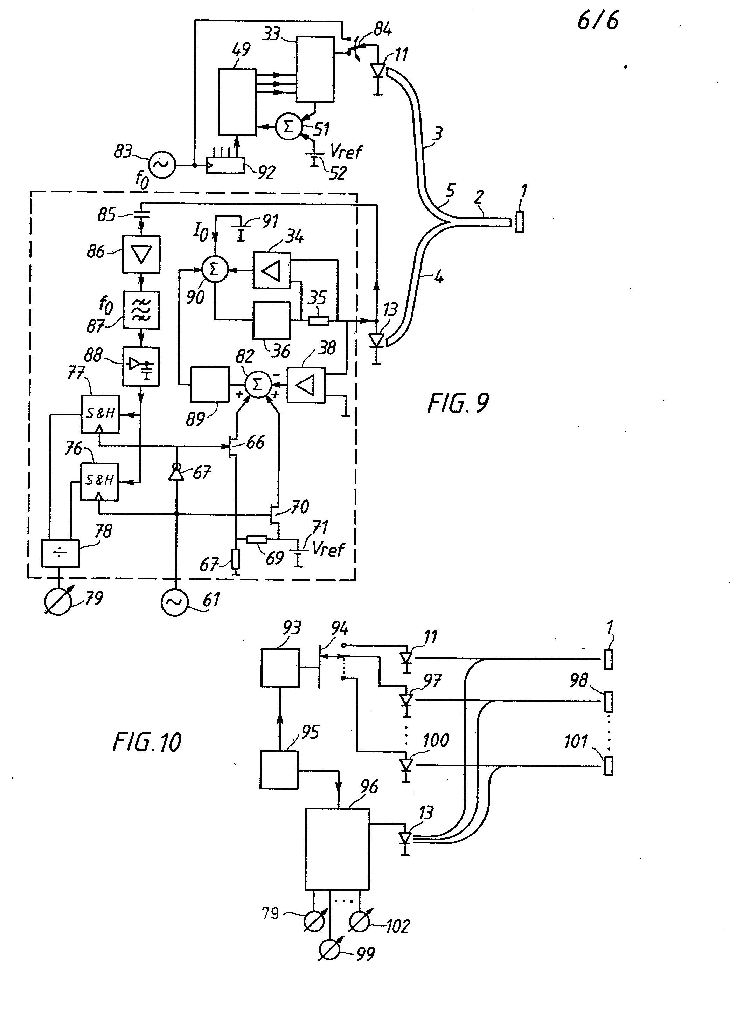

Fig. 9 eine Meßanordnung der in Fig. 2 gezeigten Art, bei der die Meßsignale aus einer Wechselgröße mit einer bestimmten Frequenz bestehen,

Fig. 10 ein System zur Multiplexierung, welches die Verwendung mehrerer Sensoren bei einer Anordnung gemäß der Erfindung gestattet.

Figur 1 zeigt das Blockschaltbild einer bekannten typischen faseroptischen Meßanordnung zur Spektralanalyse. Die Meßgröße, z.B. eine Temperatur, ein Druck oder ein pH-Wert, beeinflußt die spektralen Eigenschaften, wie z.B. das Absorptions- oder Lumineszenzspektrum, des Sensors 1. Zur Spektralanalyse des Sensors 1 wird Licht von zwei verschiedenen Leuchtdioden 11 und 12 durch die lichtleitenden Fasern 7, 8, 3 und 2 zum Sensor 1 gesandt, und das vom Sensor 1 beeinflußte Licht wird von den Fotodioden 13 und 14, welche über die lichtleitenden Fasern 9, 10, 4 und 2 mit dem Sensor

- 4 -

verbunden sind, erfaßt. Zur Verbindung der lichtleitenden
Faser werden Faserverzweigungen 5, 6a und 6b verwendet.

Um wellenlängenmäßig stabile Emissionsspektren der Leuchtdioden 11 und 12 zu garantieren, werden diese mit einem
konstanten Strom von den Stromreglern 21 bzw. 23 gespeist
und durch die Temperaturregler 22 bzw. 24, die an die Öfen
17 bzw. 18 angeschlossen sind, in denen die Leuchtdioden 11
und 12 angeordnet sind, auf konstanter Temperatur gehalten.
Auf entsprechende Weise werden die Fotodioden (Detektoren)
13 und 14 mit zugehörigen optischen Filtern 15 bzw. 16
durch die Temperaturregler 26 bzw. 28, die an die Öfen 19
bzw. 20 angeschlossen sind, auf konstanter Temperatur gehalten. Die Detektorsignale werden durch Verstärker 25 und
27 verstärkt und dann im vorliegenden Falle einem elektronischen Quotientenbilder 29 zugeführt, der ein Meßsignal für das Anzeigegerät 30 liefert. Als Anwendungsbeispiel für die in Fig. 1 skizzierte Meßanordnung kann eine
Temperaturmessung genannt werden, wobei die Temperaturabhängigkeit einer Absorptionskante des Sensormaterials
analysiert wird. Dabei kann das Licht der Leuchtdiode 11
in demselben Wellenlängenbereich liegen, wie die Absorptionskante des Sensormaterials, während das Licht der
Leuchtdiode 12 in einem Wellenlängenbereich liegt, der nicht
mit der Absorptionskante zusammenfällt. Das Filter 15 filtert Licht von der Leuchtdiode 12 fort, so daß das Signal
der Fotodiode 13 nur vom Licht der Leuchtdiode 11 herrührt. Auf gleiche Weise blockiert das Filter 16 Licht, welches von der Leuchtdiode 11 herrührt. Die zu messende Temperatur wird daher im wesentlichen das Signal der Fotodiode 13 beeinflussen, während das Signal der Fotodiode 14
ein Bezugssignal ist. Nach erfolgter Quotientenbildung im
Quotientenbilder 29 erhält man daher ein Meßsignal, das
gegenüber Unstabilitäten der Übertragungsparameter in den
lichtleitenden Fasern kompensiert ist.

/5

- 5 -

Die Meßanordnung nach Fig. 1 ist relativ komplex und erfordert eine Reihe von Präzisionsbauteilen, wie zum Beispiel Faserverzweigungen und temperaturgeregelte Öfen. In den Faserverzweigungen treten außerdem Verluste auf, durch welche das Verhältnis Nutzsignal/Störpegel der Anordnung herabgesetzt wird.

Durch die vorliegende Erfindung werden diese Probleme dadurch wesentlich verringert, daß die Temperaturregelung in den Bauteilen selbst geschieht und daß die Emissions- und Empfindlichkeitsspektren dadurch variiert werden, daß die Temperatur der Lichtquellen bzw. der Emitter variiert wird. Den Aufbau einer nach der Erfindung vereinfachten Anordnung zeigt Figur 2. Die Leuchtdioden 11 und 12 mit den Öfen 17 bzw. 18 nach Figur 1 sind durch eine einzige intern temperaturgesteuerte bzw. -geregelte Leuchtdiode 11 ersetzt, und die Fotodioden 13 und 14 mit den Filtern 15 bzw. 16 und den Öfen 19 bzw. 20 nach Figur 1 sind durch eine einzige intern temperaturgesteuerte bzw. -geregelte Fotodiode mit integriertem Bandabstandfilter ersetzt. Gleichzeitig entfallen die in Figur 1 verwendeten lichtleitenden Fasern 7, 8, 9 und 10 sowie die Faserverzweigungen 6a und 6b. Diese Vereinfachung der Optoelektronikseite wird auf Kosten einer umfangreicheren Komplexelektronik 31 und 32 erreicht, die nachstehend näher beschrieben wird. Die Beschreibung gilt für den Fall, daß von der Leuchtdiode 11 ein festes Emissionsspektrum gewünscht wird und von der Leuchtdiode 13 ein veränderliches Empfindlichkeitsspektrum gewünscht wird. Die Anordnung nach der Erfindung kann auch ein variables Emissionsspektrum und ein festes Empfindlichkeitsspektrum, oder sowohl ein variables Emissionsspektrum als auch ein variables Empfindlichkeitsspektrum haben, was leicht durch Variation der Ausführungsform nach Figur 2 zu erreichen ist. In dem Fall, in dem man ein hinsichtlich Form und Lage festes Emissionsspektrum haben möchte und die Intensität jedoch nicht kritisch ist, kann

/6

- 6 -

. die Leuchtdiode 11 dadurch temperaturstabilisiert werden,
daß der Strom I durch die Diode und die Spannung U an der
Diode gemessen werden und der Strom I so geregelt wird,
daß U/ln I konstant gehalten wird. Eine andere Möglichkeit
besteht darin, die Temperatur direkt mit einem Temperatursensor (Thermistor, Diode oder Thermoelement), der guten
thermischen Kontakt mit der Leuchtdiode hat, zu messen
und den Strom durch die Leuchtdiode so zu steuern, daß die
Temperatur konstant gehalten wird. Die Leuchtdiode selbst
kann als Temperatursensor dienen, wenn man ihre normale
Funktion für gewisse Zeitintervalle unterbricht und einen
konstanten Strom durch die Diode schickt. Der Spannungsfall an der Leuchtdiode ist dann ein Meßwert für die Temperatur, der benutzt wird, um den Arbeitsstrom derart zu
steuern, daß die Leuchtdiodentemperatur konstant gehalten
wird.

Figur 3 zeigt Kurven für den Strom I durch die Leuchtdiode
und die Spannung U an der Leuchtdiode für verschiedene
Verfahren, die angewendet werden können, wenn man ein
Emissionsspektrum wünscht, das auch hinsichtlich der Intensität unveränderlich ist. Gemeinsam für alle Fälle ist,
daß der Meßverlauf zeitmäßig in zwei Intervalle aufgeteilt
wird. Während eines Intervalls wird normaler Arbeitsstrom
$I_0$ durch die Leuchtdiode getrieben, und das Messen wird
durch Analyse des vom Sensor kommenden Lichtes durchgeführt. Gleichzeitig wird die Spannung an der Leuchtdiode
gemessen. Sie ist ein Maß für die Temperatur der Leuchtdiode. Abhängig von eventuellen Abweichungen in der
Leuchtdiodentemperatur erfolgt eine Korrektur der Temperatur dadurch, daß der Strom durch die Leuchtdiode während
des nächsten Intervalls im Verhältnis zu $I_0$ variiert wird.
Danach folgt wieder ein Meßintervall mit normalem Arbeitsstrom $I_0$. Figur 3a zeigt Strom- und Spannungskurven für
eine Anordnung, bei der die Temperaturkorrektur mit Stromimpulsen konstanter Amplitude erfolgt, deren zeitliche

/7

- 7 -

Dauer jedoch von der gemessenen Temperaturabweichung im unmittelbar vorhergehenden Meßintervall gesteuert wird. Die Stromimpulse können im Verhältnis zu dem normalen Arbeitsstrom $I_0$ positiv oder negativ sein, was davon abhängt, ob die Temperatur kleiner oder größer als ihr Sollwert ist.

Die Kurven in Figur 3b gelten für eine Anordnung, bei der die Temperaturkorrektur mit Stromimpulsen konstanter Dauer erfolgt, deren Amplitude jedoch von der Temperaturabweichung im unmittelbar vorhergehenden Meßintervall gesteuert wird. Die Stromimpulse können im Verhältnis zu $I_0$ positiv oder negativ sein, was von dem Vorzeichen der Temperaturabweichung abhängt.

Figur 3c zeigt Strom- und Spannungskurven für eine Anordnung, bei der die Korrektur der Temperatur nach jedem Meßintervall durch Stromimpulse konstanter Dauer und konstanter Amplitude erfolgt. Die Impulse sind im Verhältnis zu $I_0$ positiv oder negativ, je nachdem, ob die Isttemperatur kleiner oder größer als der Sollwert ist. Die Anordnung, deren Strom- und Spannungskurven Figur 3d zeigt, hat eine adaptive Steuerung des Leuchtdiodenstroms. Wenn nach dem Einschalten die Leuchtdiodentemperatur von ihrem Sollwert abweicht, erfolgt die Korrektur durch Stromimpulse mit einer Energie, die von der gemessenen Temperaturabweichung abhängt. Im stationären Zustand werden Korrekturimpulse erst dann gegeben, wenn die Spannung an der Diode anzeigt, daß ihre Temperatur vom Sollwert um einen im voraus bestimmten Wert abweicht.

Eine Anordnung zur Erzielung eines unveränderlichen Emissionsspektrums zeigen die Figuren 4 und 5. Die Anordnung ist von der Art, die Strom- und Spannungskurven gemäß Figur 3c erzeugt.

Figur 4 zeigt eine Elektronikschaltung 33, die aus einem Speiseglied für den Leuchtdiodenstrom und Gliedern zum Mes-

/8

- 8 -

sen von Strom und Spannung besteht. Ein Stromspeiseglied 36 mit eingebautem Regler treibt über einen Meßwiderstand 35 Strom durch die Leuchtdiode 11. Der durch die Diode fließende Strom wird über den Meßwiderstand 35 und einen Verstärker 34 gemessen. Der Strommeßwert wird mit einem Sollwert in einem Vergleichsglied 37 verglichen, dessen Ausgangssignal das Speiseglied 36 steuert. Alternativ kann eine Lichtregelung verwendet werden, bei der das Leuchtdiodenlicht über eine Fotodiode rückgeführt wird. Der Sollwert für den Strom wird dadurch gewonnen, daß die Ausgangsspannung einer Referenzspannungsquelle 42 über einen aus den Widerständen 43 bis 46 bestehenden Spannungsteiler aufgeteilt wird. Von den einzelnen Anzapfungen am Spannungsteiler können die Spannungen $U_1$, $U_2$ und $U_3$, die den Strömen $I_1$, $I_0$ bzw. $I_3$ in Figur 3c entsprechen, zum Vergleichsglied 37 durchgeschaltet werden. Zur Durchschaltung dienen Schalter 39, 40 bzw. 41, die von den Signalen $x_1$, $x_2$ und $x_3$ gesteuert werden. Die Spannung $U_f$ an der Leuchtdiode wird über einen Verstärker 38 gemessen und gibt ein Maß für die Temperatur der Diode. So, wie die Anordnung in den Figuren 3c, 4 und 5 gezeichnet ist, erfolgt die Temperaturmessung nur bei dem konstanten Strom $I_0$. Eine andere Alternative besteht darin, die Temperatur bei beliebigem Strom zu messen, indem $U_f$ für den Strom korrigiert wird, der während des Messens benutzt wird.

Figur 5 zeigt eine Elektronikschaltung 49, die das Umschalten zwischen den Zeitintervallen zum Messen und zur Temperaturkorrektur der Leuchtdiode steuert und die Steuersignale zum Umschalten des Stromsollwertes liefert. Ein Rechteckwellengenerator 50 steuert die Länge der Meß- und Kalibrierungsintervalle. Wenn das Generatorsignal groß ist, also eine logische Eins darstellt, dann ist das Steuersignal $x_2$ vorhanden, während die Steuersignale $x_1$ und $x_3$ gleichzeitig verschwinden infolge des Negationsgliedes 55 und der beiden UND-Glieder 56 und 58. Dadurch wird der Sollwert $U_2$, der den Leuchtdiodenstrom $I_0$ gibt, eingeschaltet. Die Spannung an der Leuchtdiode $U_f$ wird in einem Vergleicherglied 51 mit der Spannung $V_{ref}$ der Referenzspannung 52 verglichen. Die Differenz der beiden Spannungen wird einem Komparator 53 zugeführt, dessen Ausgangssignal vorhanden ist, wenn $U_f < V_{ref}$. Das Ausgangssignal vom Komparator 53

/9

- 9 -

wird dann in eine D-Kippstufe 54 eingegeben, wenn das auf den negierten Steuereingang der D-Kippstufe 44 gegebene Signal vom Generator 50 klein ist. Das kleine Generatorsignal bewirkt, daß das Steuersignal $x_2$ verschwindet und gleichzeitig der Signalwert über die UND-Glieder 56 und 58 freigegeben wird. Abhängig vom Ausgangssignal der Kippstufe 54 erscheint eines der Signale $x_1$ oder $x_3$, während das andere infolge eines Negationsgliedes 57 in dem einen Zweig verschwindet. Wenn der Spannungsfall an der Leuchtdiode während des vorhergehenden Meßintervalles kleiner als der Referenzwert war, die Diode also zu warm war, so erscheint das Ausgangssignal der D-Kippstufe 54 und das Signal $x_1$ wird Eins und das Signal $x_3$ wird Null. Dadurch wird der Strom $I_1$ durch die Leuchtdiode eingeschaltet. Wenn der Leuchtdiodenspannungsfall größer als der Sollwert ist, wird $x_3$ Eins und der Strom $I_3$ wird durch die Leuchtdiode geschickt.

Eine andere Ausführungsform erhält man, wenn die Leuchtdiode 11 zusammen mit einem separaten Heizglied montiert wird, das aus einer Diode oder einem Widerstand besteht, die/der in gutem thermischen Kontakt mit der Leuchtdiode steht, beispielsweise, indem es auf derselben Halbleiterscheibe angeordnet ist. Durch die Leuchtdiode wird ein konstanter Strom $I_0$ geschickt, und der Spannungsfall an der Diode wird dazu benutzt, den Strom durch das Heizglied so zu steuern, daß die Spannung an der Leuchtdiode und damit ihre Temperatur konstant gehalten werden. Statt des Heizgliedes kann auch ein thermoelektrischer Kühler verwendet werden, dessen Strom so gesteuert wird, daß der Spannungsfall an der Leuchtdiode und damit die Temperatur konstant gehalten werden.

Bei einer Temperatursteuerung der für den Empfang des Lichtes vorgesehenen Fotodiode muß der Verlauf in drei Intervalle gemäß Figur 6 aufgeteilt werden. Zuerst kommt ein Temperaturmeßintervall, in welchem ein konstanter Strom durch die Fotodiode geschickt wird und gleichzeitig der Spannungsfall an der Fotodiode gemessen wird, wodurch man einen Wert für die Temperatur bekommt. Während des zweiten Intervalls, dem Korrekturintervall, wird durch die Fotodiode ein Strom geschickt, der von der im

- 10 -

vorangegangenen Temperaturmeßintervall gemessenen Temperatur abhängig ist und eine Korrektur der Temperatur der Fotodiode bewirkt. Das dritte Intervall ist ein Meßintervall, in welchem die Fotodiode auf normale Weise als Lichtdetektor arbeitet.

Zur Temperatursteuerung der Fotodiode können die oben beschriebenen Verfahren zur Steuerung der Temperatur der Leuchtdiode verwendet werden.

Die Fotodiode kann auch mit einem in gutem thermischen Kontakt mit ihr stehenden septaraten Heizglied versehen sein. Das Heizglied kann ein Widerstand oder eine Diode sein, der/die evtl. mit der Fotodiode auf demselben Halbleiterkörper integriert ist. Das Heizglied kann außerdem als Temperatursensor dienen, wenn es aus einer Diode oder einem temperaturabhängigen Widerstand besteht. Eine Möglichkeit zur Temperaturstabilisierung besteht darin, die Heizdiode so zu benutzen, daß $U/\ln I$ konstant gehalten wird. Ein Beispiel für den Aufbau des Empfängerteils in einer Meßanordnung mit Temperatursteuerung der Fotodiode 13 zeigt Figur 7. Die Kurve des durch die Fotodiode fließenden Stromes zeigt Figur 6. Außerdem zeigt Figur 6 zwei Steuersignale CP1 und CP2. Aus der in Figur 6a gezeigten Stromkurve geht hervor, wie der Arbeitsverlauf in Intervalle aufgeteilt wird. Während des Temperaturmeßintervalles wird der Strom $I_0$ durch die Diode getrieben und gleichzeitig die Temperatur gemessen. Je nachdem, ob die Temperatur größer oder kleiner als der Sollwert ist, wird während des Korrekturintervalles der Strom $I_1$ bzw. $I_3$ durch die Diode geleitet. Während des Meßintervalles wird kein Strom durch die Diode geleitet und die Diode arbeitet als ein normaler Fotodetektor.

Figur 7 zeigt eine Empfängeranordnung, bei der die Analyse der Spektralverteilung des Lichtes dadurch vorgenommen wird, daß die spektrale Empfindlichkeit der Fotodiode 13 durch Änderung ihrer Arbeitstemperatur variiert wird. Die Leistung wird verstärkt, wenn die Fotodiode mit einem Filter mit temperaturabhängiger Spektralempfindlichkeit versehen wird. Die Anordnung besteht aus den Elektronikschaltungen 33 und 49 - welche in den Figuren 4 bzw. 5 dargestellt sind - zur Temperaturregelung der

/11

- 11 -

Diode 13, einer Schaltung 81, die den Wechsel zwischen zwei Arbeitstemperaturen steuert, und einer Schaltung 80, welche die Auswertung des Meßsignals besorgt. Von einem Oszillator 61 erhält man das Steuersignal für einen dreistufigen Ringzähler 62, dessen Ausgänge von einem ODER-Glied 63 dekodiert werden, welches das Steuersignal CP1 in Figur 6b bildet. CP1 ist der Befehl für den Strom $I_0$ an die Schaltung 49. Der Ausgang der dritten Stufe des Ringzählers 62 liefert das Signal CP2 in Figur 6c; das Signal steuert über ein Negationsglied 60 und einen Schalter 59 das Fortschalten der Temperaturkontrollglieder von der Fotodiode 13. CP2 wird auch als Signal für einen Zähler 64 benutzt, der über eine T-Kippstufe 65, ein Negationsglied 67 und zwei Schalter 66 bzw. 70 den Temperatur-Sollwert für die Fotodiode 13 wechselt. Die Sollwerte werden von einer Referenzspannung 71 und einem Spannungsteiler gebildet, der aus den Widerständen 68 und 69 besteht. Die Auswertung des Meßsignals geschieht dadurch, daß der Fotostrom der Diode 13 in einem Verstärker 72 verstärkt wird, dessen Ausgangssignal zu zwei S/H-Gliedern ("sample-and-hold-Glieder") geht. Ein S/H-Glied ist ein solches, welches den einmal an seinem Eingang vorhanden gewesenen Wert speichert und als Ausgangsgröße abgibt. Sobald eine neue Eingangsgröße erscheint, wird diese statt der bisherigen gespeichert und am Ausgang abgegeben. Das Einspeichern in die S/H-Glieder wird vom Ausgangssignal der Kippstufe 65 über ein Negationsglied 75 und zwei UND-Glieder 73 und 74 gesteuert, so daß die beiden S/H-Glieder Werte erhalten, die den beiden Temperaturen und somit auch den beiden verschiedenen Spektralverteilungen der Empfindlichkeit der Fotodiode 13 entsprechen.

Über die UND-Glieder 73 und 74 wird das Einspeichern des Steuersignals CP2 derart gesteuert, daß das Einspeichern am Ende jedes Meßintervalls geschieht, wenn die Steuersignale stabilisiert wurden. Der Quotient aus den Ausgangssignalen der S/H-Glieder wird in einem Divisionsglied 78 gebildet, dessen Ausgangssignal auf ein Anzeigegerät 79 gegeben wird.

Die Signalsauswertung in dem Empfänger in Figur 7 gründet sich

- 12 -

darauf, daß Variationen der Übertragungsparameter des optischen System durch Quotientenbildung kompensiert werden. Eine andere Möglichkeit besteht darin, daß der Ausgang des einen S/H-Gliedes über einen Regler die Verstärkung eines einstellbaren Verstärkers steuert, der vor den S/H-Gliedern placiert ist, so daß das Ausgangssignal des S/H-Gliedes konstant gehalten wird. Das Ausgangssignal des anderen S/H-Gliedes muß dann als Meßsignal dienen, das bezüglich Variationen der optischen Übertragungsparameter korrigiert ist. Im Empfänger in Figur 2 werden zwei Spektralempfindlichkeiten durch Temperaturstabilisierung konstant gehalten, während man das Ausgangssignal durch Quotientenbildung erhält. Eine andere Möglichkeit besteht darin, ein Spektrum konstant zu halten und das andere so zu steuern, daß der Quotient konstant gehalten wird. Die Temperatur, die das gesteuerte Spektrum ergibt, ist dann der Meßwert, und man erhält diesen als Spannung an der Diode.

Figur 8 zeigt, wie eine Meßanordnung gemäß der in Figur 2 gezeigten Art mit den Blöcken aufgebaut sein kann, die anhand der Figuren 3 bis 7 beschrieben wurden. Aus Figur 8 geht hervor, daß die Synchronisierung der Glieder zur Temperaturstabilisierung der Leucht- bzw. Fotodiode dadurch erreicht wird, daß der Steuerimpuls CP2 von der Fotodiodenstabilisierung das Steuersignal für die Leuchtdiodenstabilisierung ist. Die Anordnung gemäß Figur 8 gründet sich darauf, daß das Emissionsspektrum für die Leuchtdiode 11 unveränderlich gehalten wird, während die Spektralempfindlichkeit für die Fotodiode zwischen zwei Werten wechselt. Eine alternative Ausführungsform besteht darin, das Emissionsspecktrum zu wechseln und statt dessen die Spektralempfindlichkeit für die Fotodiode unveränderlich zu halten. Es besteht auch die Möglichkeit, sowohl das Emissionsspektrum für die Leuchtdiode wie die Spektralempfindlichkeit für die Fotodiode zu wechseln, um dadurch eine höhere Empfindlichkeit zu erreichen. In Figur 8 ist auch ein Filter 13a vorhanden, der auf dieselbe Weise wie die Filter 15 und 16 in Figur 1 wirkt.

Figur 9 zeigt eine Meßanordnung derselben Art wie Figur 2, wo-

/13

- 13 -

bei das Meßsignal aus einem Wechselsignal mit der Frequenz $f_0$ besteht und die Temperaturstabilisierung der Fotodiode mit Gleichstrom durchgeführt wird. Einem Oszillator 83, der ein sinuswellenförmiges Signal mit der Frequenz $f_0$ erzeugt, wird über einen Frequenzteiler 92 das Steuersignal für die Glieder zur Temperaturstabilisierung der Leuchtdiode 11 entnommen. Die Temperaturstabilisierung erfolgt in der anhand von Figur 5 beschriebenen Weise. Ein Schalter 84 besorgt den Wechsel zwischen der Temperaturstabilisierung der Leuchtdiode 11 und der Speisung der Leuchtdiode 11 mit einem sinusförmigen Strom vom Oszillator 83. Das sinusförmige Licht von der Leuchtdiode wird vom Sensormaterial moduliert und überträgt dadurch das Meßsignal. Auf der Empfängerseite wird der Meßverlauf vom Oszillator 61 gesteuert, der über das Negationsglied 67, die Schalter 66 und 70 den Temperatursollwert wechselt. Den Temperatursollwert erhält man von der Referenzspannung 71 und dem Spannungsteiler, der von den Widerständen 67 und 69 gebildet wird. Der Temperatursollwert wird im Vergleichsglied 82 mit der Spannung an der Fotodiode 13 verglichen, die mit dem Verstärker 38 gemessen wird. Die Regelabweichung wird einem Regler 89 zugeführt, dessen Ausgangssignal einem Vergleichsglied 90 zugeführt wird, in welchem ein von der Referenzgröße 91 abgeleiteter Stromsollwert mit dem Stromistwert verglichen wird. Letzterer wird mit Hilfe eines Widerstandes 35 im Ausgang des Gliedes 36 gemessen und einem Differentialverstärker 34 zugeführt, dessen Ausgangsgröße an das Vergleichsglied 90 angeschlossen ist. Das Ausgangssignal des Vergleichsgliedes 29 ist das Eingangssignal für das Glied 36, welches ein mit einem Regler kombiniertes Stromspeiseglied ist. Das Glied 36 treibt einen Strom solcher Größe durch die Fotodiode 13, daß die Spannung an dieser und damit die Temperatur mit dem Sollwert übereinstimmen.

Dem durch die Fotodiode 13 fließenden Gleichstrom ist ein fotoerzeugter Wechselstrom überlagert, welcher die Signalinformation enthält. Das Wechselsignal wird dem Fotodiodenkreis über einen Schaltkondensator 85 und einen Verstärker 86 entnommen. Mittels eines Bandpaßfilters 87 wird die Komponente mit der Frequenz $f_0$ aus dem Wechselsignal herausgefiltert. Das Aus-

0050306
28.09.1981
21 011 PE

- 14 -

gangssignal des Filters 87 wird einem Enveloppedetektor 88
(Hüllkurvendemodulator) zugeführt, dessen Ausgangssignal in
einen der beiden S/H-Glieder 76 und 77 eingespeichert, wird je nachdem, welcher Temperaturwert eingeschaltet ist. Aus den Ausgangssignalen der beiden S/H-Glieder wird im Divisionsglied 78 der
Quotient gebildet, der als Meßsignal durch das Anzeigegerät 79
angezeigt wird.

Eine Anordnung zur Multiplexierung zeigt Figur 10. Mehrere
Sensoren 1, 98, ... 101 benutzen dieselbe Elektronikanordnung.
Die Leuchtdioden 11, 97 ... 100 werden durch einen Mehrwegumschalter 94 der Reihe nach an eine Elektronikschaltung 93 angeschaltet. Die Schaltung 93 enthält Glieder zur Temperaturstabilisierung der Leuchtdioden. Sie wird durch ein Steuerglied 95
gesteuert. Dieses steuert auch eine Auswertungsschaltung 96,
welche eine Temperatursteuerung der Fotodiode 13 und eine Auswertung der Meßwerte, die den betreffenden Anzeigegeräten 79,
99 ... 102 zugeführt werden, bewirkt. Dadurch, daß die Elektronik für mehrere Sensoren benutzt wird, werden die Kosten pro
Kanal niedriger, was allerdings auf Kosten längerer Meßzeiten
erreicht wird.

Die in der vorausgegangenen Beschreibung verwendete Bezeichnung
"Licht" umfaßt nicht nur elektromagnetische Strahlung im Bereich des sichtbaren Lichtes, sondern auch im ultravioletten
und infraroten Lichtbereich.

In der Beschreibung wurden als Lichtquellen stets Leuchtdioden
genannt. Als Lichtquellen kommen aber auch Halbleiterlaser in
Betracht. Als Fotodetektoren können außer Fotodioden auch Fototransistoren verwendet werden.Im letztgenannten Falle wird
die Temperatur dadurch gemessen, daß der Basis-Emitter-Spannungsfall gemessen wird.

Die Erfindung kann im Rahmen des offenbarten allgemeinen Erfindungsgedankens in vielfacher Weise variiert werden.

/15

Patentanwalt und Rechtsanwalt
Dr.-Ing. Dipl.-Ing. Joachim Boecker

— 15 —

6 Frankfurt / Main 1   28.09.1981
Rathenauplatz 2-8   21 011 PE
Telefon: (06 11) *28 23 55
Telex: 4 189 066 itax d

0050306

## Patentansprüche

1. Faseroptische Meßanordnung zum Messen physikalischer oder chemischer Größen mit mindestens einer Lichtquelle (11), wie z.B. einer Leuchtdiode, die in opitscher Verbindung mit einem Sensor (1) steht, dessen spektrale Eigenschaften (z.B. Absorptions- oder Lumineszenzspektrum) von der Meßgröße verändert werden, und mit mindestens einem Lichtdetektor (13) (z.B. Fotodiode oder Fototransistor) zum Empfang des Ausgangssignals vom Sensor (1), d a d u r c h   g e k e n n - z e i c h n e t, daß das Meßsignal durch Spektralanalyse gewonnen wird, die dadurch erfolgt, daß die Spektralverteilung der Lichtquelle (11) verändert oder konstant gehalten wird, und/oder daß das Empfindlichkeitsspektrum des Lichtdetektors (13) verändert oder konstant gehalten wird, und das diese Steuerung des Emissionsspektrums bzw. des Empfindlichkeitsspektrums durch Steuerung der Temperatur der Lichtquelle (11) bzw. des Lichtdetektors (13) erfolgt.

2. Meßanordnung nach Anspruch 1, d a d u r c h   g e k e n n - z e i c h n e t, daß der Lichtdetektor (13) mit einem optischen Filter (13a) versehen ist, das in gutem thermischen Kontakt mit dem Detektor steht und dessen Transmissionskurve temperaturabhängig ist, wobei das Filter (13a), welches beispielsweise aus Halbleitermaterialschichten besteht, die durch Flüssigkeitsepitaxi oder MOCVD direkt auf die Fotodiode (13) aufgebracht sind.

3. Meßanordnung nach Anspruch 1 oder 2, d a d u r c h   g e - k e n n z e i c h n e t, daß die Temperaturmessung zur Steuerung der Temperatur der Lichtquelle (11) und des Lichtdetektors (13) durch Messen irgendeines temperaturabhängigen Parameters der Lichtquelle (11) bzw. des Lichtdetektors (13) erfolgt, z.B. des Diodenspannungsfalles einer Leuchtdiode

/16

- 16 -

(11) und einer Fotodiode (13) oder des Basis-Emitter-Spannungsfalles eines Fototransistors, und daß die Messung mit
konstantem Strom oder mit beliebigem Strom erfolgt, wobei
eine Anordnung zur Kompensation des Temperaturmeßwertes in
Bezug auf Änderungen des Stromes vorhanden ist.

4. Meßanordnung nach einem der vorhergehenden Ansprüche, d a -
d u r c h   g e k e n n z e i c h n e t , daß die Temperatur
dadurch gesteuert wird, daß ein steuerbarer, die Lichtquelle
bzw. den Lichtdetektor erwärmender Strom durch die Lichtquelle bzw. den Lichtdetektor geleitet wird.

5. Meßanordnung nach Anspruch 4, d a d u r c h   g e k e n n -
z e i c h n e t , daß die Temperatur der Lichtquelle (11) und
des Lichtdetektors (13) dadurch gesteuert werden, daß der
sie durchfließende Strom I so gesteuert wird, daß U/ln I,
wobei U die Spannung an der Lichtquelle bzw. Lichtdetektor
ist, auf einem Sollwert gehalten wird, und daß dieser Sollwert zur Ermöglichung einer Spektralanalyse verändert werden kann.

6. Meßanordnung nach Anspruch 4, d a d u r c h   g e k e n n -
z e i c h n e t , daß die Temperaturstabilisierung der Lichtquelle (11) und des Lichtdetektors (13) durch Ströme erfolgt, die eine andere Modulationsfrequenz haben als die
zum Messen verwendeten Ströme.

7. Meßanordnung nach Anspruch 3 oder 4, d a d u r c h   g e -
k e n n z e i c h n e t , daß die verschiedenen Vorgänge,
wie Temperaturmessung, Temperaturkorrektur und Messung der
spektralen Eigenschaften des Sensors (1), zeitlich untereinander aufgeteilt sind.

8. Meßanordnung nach Anspruch 3 oder 4, d a d u r c h   g e -
k e n n z e i c h n e t , daß die Temperaturkorrektur der
Lichtquelle (11) und des Lichtdetektors (13) mittels Stromimpulsen geschieht, deren Energie von der Abweichung
zwischen der gemessenen Temperatur und dem Sollwert der

/17

- 17 -

Temperatur abhängt.

9. Meßanordnung nach Anspruch 8, d a d u r c h  g e k e n n - z e i c h n e t, daß die Temperaturkorrektur erst dann vorgenommen wird, wenn die Differenz zwischen den Ist- und Sollwerten der Temperatur einen bestimmten Wert überschreitet.

10. Meßanordnung nach einem der vorhergegangenen Ansprüche, d a - d u r c h  g e k e n n z e i c h n e t, daß die Temperatur der Lichtquelle (11) und/oder des Lichtdetektors (13) mit einem separaten Temperatursensor gemessen wird, wie z.B. einer auf derselben Halbleiterscheibe wie der Lichtdetektor integrierten Diode.

11. Meßanordnung nach einem der vorhergegangenen Ansprüche, d a d u r c h  g e k e n n z e i c h n e t, daß die Tempe- ratur der Lichtquelle und/oder des Fotodetektors dadurch gesteuert wird, daß Strom durch ein separates Heizglied oder einen thermoelektrischen Kühler geleitet wird, der in gutem thermischen Kontakt mit der Lichtquelle bzw. dem Lichtdetektor, beispielsweise eine Diode oder ein Widerstand, der auf derselben Halbleiterscheibe wie der Lichtdetektor integriert ist.

12. Meßanordnung nach Anspruch 4 und 10, d a d u r c h  g e - k e n n z e i c h n e t, daß der Strom durch die Lichtquelle und/oder den Lichtdetektor so gesteuert wird, daß die Temperatur mit dem Sollwert übereinstimmt.

13. Meßanordnung nach Anspruch 3 und 11, d a d u r c h  g e - k e n n z e i c h n e t, daß der Strom durch das Heizglied alternativ durch den Kühler so gesteuert wird, daß die Temperatur der Lichtquelle und des Lichtdetektors mit dem zugehörigen Sollwert übereinstimmt.

14. Meßanordnung nach einem der vorhergegangenen Ansprüche, d a d u r c h  g e k e n n z e i c h n e t, daß die Spektral-

/18

- 18 -

analyse durch Messung in zwei verschiedenen Wellenlängenbereichen dadurch vorgenommen wird, daß das Emissionsspektrum konstant gehalten und das Empfindlichkeitsspektrum variiert wird, daß das Emissionsspektrum variiert und das Empfindlichkeitsspektrum konstant gehalten wird, oder daß das Emissionsspektrum und das Empfindlichkeitsspektrum variiert werden, und daß das Meßsignal entweder als Quotient aus den Signalen in den beiden Wellenlängenbereichen gewonnen wird oder aus dem Ausgangssignal für den einen Wellenlängenbereich, wobei das Signal für den anderen Wellenlängenbereich durch Steuerung eines variablen Verstärkers im Signalpfad konstant gehalten wird.

15. Meßanordnung nach einem der Ansprüche 1 bis 13, d a - d u r c h   g e k e n n z e i c h n e t, daß die Spektralanalyse durch Messung in zwei verschiedenen Wellenlängenbereichen geschieht, wobei der eine Wellenlängenbereich fest ist und der andere durch die Temperatur der Lichtquelle (11) und/oder des Fotodetektors (13) so gesteuert wird, daß entweder der Quotient aus den Signalen in den beiden Wellenlängenbereichen konstant bleibt, oder daß das Ausgangssignal für den einen Wellenlängenbereich konstant gehalten wird, wobei das Signal für den anderen Wellenlängenbereich durch Steuerung eines variablen Verstärkers im Signalpfad konstant gehalten wird, und daß das Meßsignal durch die gesteuerte Temperatur an der Lichtquelle und/oder dem Lichtdetektor gewonnen wird.

16. Meßanordnung nach Anspruch 4 oder 11, d a d u r c h   g e - k e n n z e i c h n e t, daß die Lichtquelle (11) und/oder der Lichtdetektor (13) zur Erzielung besserer Regeleigenschaften bei niedriger Arbeitstemperatur mit einem thermoelektrischen Kühler gekühlt werden.

FIG.1

FIG.2

FIG.3a

FIG.3b

FIG.5

FIG.3c

FIG.3d

FIG.4

4/6

FIG.7

FIG.6a

FIG.6b

FIG.6c

FIG.8

0050306
28.09.1981
21 011 PE

6/6

FIG. 9

FIG. 10